# EUROPÄISCHE PATENTSCHRIFT

(11) **EP 2 848 831 B1**
(45) Veröffentlichungstag und Bekanntmachung des Hinweises auf die Patenterteilung: **06.09.2017**
(21) Anmeldenummer: 14178504.8
(22) Anmeldetag: 25.07.2014
(51) Int. Cl.: F16C 33/74, F16C 33/10, F16C 11/04

(54) **Lageranordnung**
Bearing assembly
Système de palier

(30) Priorität: 29.07.2013 DE 102013012542
(43) Veröffentlichungstag der Anmeldung: 18.03.2015
(73) Patentinhaber: Liebherr-Werk Bischofshofen GmbH, 5500 Bischofshofen (AT)
(72) Erfinder: Winter, Johann, 5450 Werfen (AT); Schmidl, Hermann, 5500 Bischofshofen (AT)
(74) Vertreter: Herrmann, Uwe

(56) Entgegenhaltungen:
- EP-A1- 2 270 348
- US-A- 2 968 498
- US-A1- 2006 022 412

## Beschreibung

Die vorliegende Erfindung betrifft eine Lageranordnung umfassend wenigstens einen, vorzugsweise zwei Lagerschenkel, der/die mit einer Bohrung versehen sind, mit wenigstens einem in der genannten Bohrung angeordneten Bolzen sowie mit wenigstens einem auf dem Bolzen gelagerten und relativ zu den Lagerschenkeln drehbaren Teil, in dessen Lagerbohrung der Bolzen aufgenommen ist, wobei zwischen dem drehbaren Teil und dem oder den Lagerschenkeln wenigstens ein auf dem Bolzen angeordneter Dichtring vorgesehen ist.

Eine derartige Lageranordnung ist aus der DE 40 40 720 C1, der EP 2 270 348 A1 und der US /022412 A1 bekannt. Bei dieser
Anordnung sind zwei Lagerschenkel vorgesehen, zwischen denen ein drehbar angeordnetes Teil angeordnet ist. Zwischen diesem drehbar angeordneten Teil und den Lagerschenkeln ist jeweils ein Dichtring angeordnet. Die aus der DE 40 40 720 C1 bekannten Dichtringe weisen eine zum Bolzen hin gewandte O-Ringdichtung auf, die an dem Bolzen anliegt.

Mobile Arbeitsmaschinen, wie beispielsweise Radlader sind hohen mechanischen Belastungen und Umweltbelastungen ausgesetzt. Die Lagerstellen, wie beispielsweise das hochbeanspruchte Lager zwischen Hubgerüst und Schaufel wird geschmiert und nach außen hin mittels der Dichtringe gegen Feuchtigkeitseintrag und Staub abgedichtet.

Ein Problem besteht darin, dass in einigen Anwendungsfällen unter Umständen die Lebensdauer von Bolzen und Lagerstellen am Hubgerüst und an der Schaufel nicht zufriedenstellend ist. Dies ist darauf zurückzuführen, dass aufgrund der genannten Dichtringe in besonderen Einsatzsituationen unter Umständen nicht ausreichend Schmiermittel bis zu den Lagerschenkeln vordringen kann, d.h. dass die Innenseite der Lagergabel nicht ausreichend geschmiert werden kann. Dies wiederum führt gegebenenfalls zu einer Ansammlung von Rost zwischen Lagerbolzen und Lagerschenkel und in weiterer Folge zu einer Reduzierung des Bolzendurchmessers und damit zu einem Lagerspiel.

Aus der DE 40 40 720 C1 ist es bekannt, dass Schmiermittel vertikal eingepresst wird, von der genannten O-Ringdichtung rückgestaut wird und radial über eine Lippendichtung des Dichtrings ausgepresst wird.

Der Bereich zwischen Bolzen und Lagerschenkel wird somit bei einigen wenigen besonderen Anwendungen, wie z.B. Schwemmsandanwendungen unter Umständen nicht hinreichend geschmiert.

Obwohl bei der bekannten Lageranordnung keine Relativbewegung zwischen Bolzen und Lagerschenkel bzw. Lagergabel erfolgt, muss eine leichte Demontage der Bolzen beispielsweise bei einer Änderung des Arbeitsgerätes möglich sein. Gelangt Flüssigkeit, Schmutz etc. in den Bereich zwischen Lagerschenkel und Bolzen kann dies wie oben ausgeführt unter Umständen zu Rostbildung führen. Der Aufbau von Rost kann den Nachteil eines schwergängigen Ausfädelns des Lagerbolzens und bei Schaufelwechsel auch einen Mehraufwand beim Austausch durch den Kundendienst hervorrufen. Wie oben angedeutet, wird durch das Festrosten der Bolzenlager Material abgetragen, was aufgrund des Arbeitseinsatzes dazu führt, dass der Bolzen nicht mehr fest von dem Lagerschenkel bzw. der Lagergabel umschlossen wird.

Es bildet sich in diesem Fall gegebenenfalls ein leichtes Lagerspiel, das Auswirkungen auf die Sicherungsschraube haben kann, die den Bolzen am Lagerschenkel fixiert. Das Lagerspiel ist auch nachteilig im Hinblick auf das innenliegende Hubgerüstlager.

Eine Ausführung der betreffenden Komponenten, wie beispielsweise die Ausführung der Lagergabel, des Bolzens und des Hubgerüstlagers in nicht rostenden Stahlvarianten ist aus Kostengründen bzw. aus fertigungstechnischen Gründen bzw. Instandhaltungsmehraufwand ggf. mit Nachteilen verbunden. Auch das Vorsehen mehrerer zusätzlicher Schmierstellen in dem Lagerschenkel bzw. im Hubgerüst ist mit Nachteilen verbunden, da diese entweder schwer zugänglich sind oder an den mechanisch hoch beanspruchten Bereichen angeordnet werden müssen und zusätzlichen Konstruktions- und Fertigungsaufwand und ggf. Instandhaltungsaufwand bedeuten.

Der vorliegenden Erfindung liegt daher die Aufgabe zugrunde, eine Lageranordnung der eingangs genannten Art dahingehend weiterzubilden, dass die Lebensdauer der Lageranordnung gegenüber bekannten Bauarten erhöht wird und das Austreiben des Bolzens ohne weiteres möglich ist.

Diese Aufgabe wird durch eine Lageranordnung mit den Merkmalen des Anspruchs 1 gelöst. Danach ist vorgesehen, dass der wenigstens eine Dichtring auf seiner zu dem Bolzen gewandten Seite zumindest eine erste Lippendichtung aufweist, die derart ausgebildet ist, dass Schmiermittel den Bereich zwischen dem Bolzen und der Lippendichtung passieren kann. Der Dichtring verfügt über eine zweite Lippendichtung, die im Querschnitt V- oder Y-förmig ausgebildet ist und mit einem ihrer beiden Dichtungsschenkel an dem Lagerschenkel und mit dem anderen an den drehbaren Teil anliegt. Erfindungsgemäß ist somit vorgesehen, dass der wenigstens eine Dichtring ein axiales Ausströmen eines Teils des Schmiermittels hin in den Bereich zwischen Bolzen und Lagerschenkel ermöglicht. Die zweite Dichtlippe erlaubt das kontrollierte Austreten von Schmiermittel und verhindert gleichzeitig das Eindringen von Schmutz, Wasser etc. in den Bereich des Lagerrings bzw. Dichtrings. Es wird somit in allen denkbaren Anwendungsfällen ein axialer Schmiermittelfluss über den Dichtring hinaus in ausreichendem Maße ermöglicht.

Dadurch kommt es zu einem Schmiermitteleintrag in den Bereich zwischen Bolzen und Lagerschenkel, wodurch die oben genannten Nachteile der bekannten Anordnung vermieden werden.

In bevorzugter Ausgestaltung der Erfindung ist vorgesehen, dass beidseitig des drehbaren Teils, wie beispielsweise beidseitig des Endes des Hubgerüstes jeweils wenigstens ein Dichtring angeordnet ist.

Ein Schmiermittelkanal kann vorgesehen sein, der an einer ersten Position auf der Oberfläche des Bolzens mündet, sodass die Bolzenoberfläche mit Schmiermittel versehen wird. Dieser Kanal kann so angeordnet sein, dass das Schmiermittel von dem Endbereich des Kanals aus beidseitig zu dem oder den Dichtringen fließt.

Weiterhin kann vorgesehen sein, dass ein zweiter Schmiermittelkanal vorgesehen ist, der an einer von der ersten Position in axialer Richtung des Bolzens beabstandeten zweiten Position auf der Oberfläche des Bolzens mündet. Dieser zweite Schmiermittelkanal kann eine Abzweigung des ersten Kanals darstellen oder auch als eigenständiger bzw. gesonderter Kanal ausgebildet sein.

So ist es beispielsweise denkbar, dass Schmierstoff über einen Schmiernippel in den innenliegenden Schmierkanal eingebracht wird, beispielsweise am Ende des Hubgerüsts. Dieser Schmierstoff wird über das Hubgerüstlager bzw. über das drehbare Teil auf die Bolzenoberfläche aufgebracht und dort in axialer Richtung des Bolzens, d.h. beispielsweise horizontal verteilt.

Zusätzlich wird durch das druckbehaftete Einbringen des Schmiermittels sowie durch die Lagerbewegung und Ausformung des Bolzenlagers und dem Dichtring Schmiermittel in horizontaler Richtung in Richtung des Lagerschenkels bzw. der Lagergabel befördert.

In einer weiteren Ausgestaltung der vorliegenden Erfindung ist vorgesehen, dass die erste Lippendichtung mit einer Vorspannung an dem Bolzen anliegt.

Weiterhin ist es denkbar, dass die erste Lippendichtung im Querschnitt C-förmig ausgebildet ist, wobei vorzugsweise vorgesehen ist, dass die offene Seite des C-förmigen Querschnitts zu dem benachbarten Lagerschenkel hinweist.

Denkbar ist es weiterhin, dass ein Schenkel der C-förmig ausgebildeten ersten Lippendichtung an dem Lagerschenkel anliegt und der andere Schenkel, vorzugsweise der Schenkel der an dem Bolzen anliegt, von dem Lagerschenkel beabstandet ist.

In einer weiteren Ausgestaltung der Erfindung ist vorgesehen, dass der oder die Dichtringe mit einem Außenring versehen sind, der eine oder mehrere Nuten aufweist, in denen ein Teil der zweiten Lippendichtung, vorzugsweise die äußeren Ränder der Dichtlippen des V- oder Y-förmigen Profils aufgenommen sind.

Dieser Außenring kann dazu dienen, im Rahmen der Montage die Dichtlippen des Profils wenigstens in einem Teilbereich des Umfangs zusammenzuhalten, damit der Dichtring in den Bereich zwischen dem drehbaren Teil und dem Lagerschenkel eingeschoben werden kann, damit ein anschließendes Verbolzen möglich ist. Nach dem Einschieben bzw. korrekten Positionieren des oder der Dichtringe kann der Außenring beispielsweise durch Lösen einer Schraube entfernt oder von dem eigentlichen Dichtring gelöst werden, sodass dieser vollumfänglich dichtend anliegt.

Denkbar ist es weiterhin, dass der oder die Dichtringe einen Grundkörper aufweist, der aus einem formstabileren Material besteht als die erste Lippendichtung. Vorzugsweise ist vorgesehen, dass der Grundkörper aus Metall besteht oder Metall aufweist. Dieser Dichtring dient des Weiteren als Distanzring zwischen Lagerschenkel und dem drehbaren Teil, wie z.B. dem Hubgerüst.

Die Erfindung betrifft des Weiteren eine mobile Arbeitsmaschine, insbesondere einen Radlader, mit wenigstens einer Lageranordnung nach einem der Ansprüche 1 bis 10.

Dabei ist es denkbar, dass das drehbare Teil der Lageranordnung durch einen Bereich des Hubgerüsts und vorzugsweise durch den Endbereich des Hubgerüsts gebildet wird. Dieser drehbare Teil ist vorzugsweise zwischen zwei Lagerschenkeln, d.h. in einer Lagergabel aufgenommen. Diese beiden Lagerschenkel weisen miteinander fluchtende Bohrungen auf, durch die sich der Bolzen erstreckt.

Die vorliegende Erfindung betrifft ein Verfahren zur Bereitstellung einer Lageranordnung nach einem der Ansprüche 1 bis 10, wobei das Verfahren den Schritt des Einschiebens des Bolzens in den wenigstens einen Dichtring aufweist, wobei die erste Lipppendichtung oder ein Teil der ersten Lippendichtung beim Einschieben des Bolzens derart verformt wird, dass diese/dieser mit einer Vorspannung an der Bolzenoberfläche anliegt. Durch das Anliegen bzw. durch die Wahl der Vorspannung ist die Einstellung eines geeigneten Schmiermittelflusses zwischen der Bolzenoberfläche und der Lippendichtung gewährleistet.

Weitere Einzelheiten und Vorteile der Erfindung werden anhand eines in den Zeichnungen dargestellten Ausführungsbeispiels näher erläutert.

Es zeigen:
- Figur 1:: einen Längsschnitt durch eine Lageranordnung durch die ein Schaufelarm eines Radladers zwischen gabelförmigen Schaufellagerblechen gelagert ist und
- Figur 2:: eine vergrößerte Ansicht eines Teils des Dichtrings zwischen Lagerschenkel und dem drehbaren Teil mit eingesetztem Bolzen und
- Figur 3:: eine vergrößerte Ansicht eines Teils des Dichtrings zwischen Lagerschenkel und dem drehbaren Teil ohne eingesetzten Bolzen.

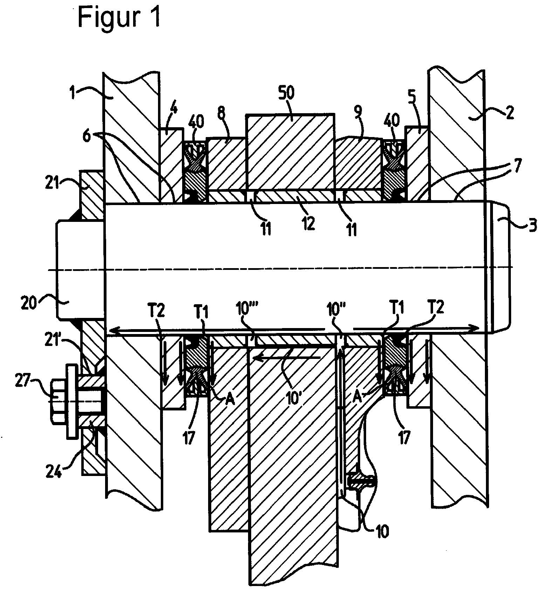

Figur 1 zeigt mit dem Bezugszeichen 1 ein erstes Schaufellagerblech und mit dem Bezugszeichen 2 ein zweites Schaufellagerblech. Diese beiden Schaufellagerbleche 1, 2 sind mit Verstärkungsteilen 4, 5 verbunden und vorzugsweise verschweißt.

Die beiden Schaufellagerbleche 1, 2 und deren Verstärkungsteile 4, 5 bilden die Lagerschenkel und weisen miteinander fluchtende Bohrungen 6, 7 auf, durch die sich ein Bolzen 3 hindurch erstreckt.

Relativ drehbar zu dem Bolzen ist der Schaufelarm 50 mit den damit verschweißten Verstärkungsblechen 8, 9. Diese Anordnung bildet das drehbare Teil, das relativ zu dem Bolzen 3 und den Lagerschenkeln drehbar ist.

Das Bezugszeichen 10 kennzeichnet einen Schmiermittelkanal zwischen dem Verstärkungsblech 9 und dem Schaufelarm 50.

Wie aus Figur 1 ersichtlich, mündet dieser Schmiermittelkanal 10 in Form der Bohrung 10" in den Bereich der Oberfläche des Bolzens 3. Vor Erreichen der Bolzenoberfläche erstreckt sich ein von dem Schmiermittelkanal 10 parallel zur Bolzenlängsachse abzweigender Kanal 10', der mit einer zweiten Bohrung 10''' in Verbindung steht, die axial beabstandet von der mit dem Schmiermittelkanal 10 fluchtenden Bohrung 10" angeordnet ist.

Wie dies weiter aus Figur 1 hervorgeht, ist der Bolzen 3 von einer Lagerbuchse 12 aus Lagermetall umgeben, in der Ringnuten 11 angeordnet sind, die gleichzeitig die Mündungsbereiche der Schmiermittelkanäle bilden.

Wie dies weiter aus Figur 1 hervorgeht, befindet sich zwischen dem Verstärkungsblech 8 und dem dazu benachbarten Verstärkungsblech 4 sowie auf der anderen Seite zwischen dem Verstärkungsblech 9 und dem Verstärkungsblech 5 jeweils ein Dichtring 17.

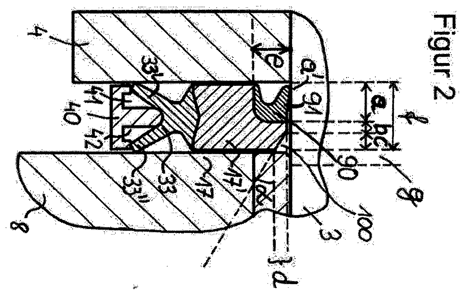

Dieser Dichtring 17 ist von einem Schutz- und Montagering 40 umgeben, der mit der zweiten Lippendichtung 33 in Verbindung steht. Zum Bolzen 3 hingewandt weist der Dichtungsring 17 eine erste Lippendichtung 90 auf, die mit einem Teilbereich an der Oberfläche des Bolzens 3 anliegt. Dies ergibt sich insbesondere aus Figur 2.

Wie in Figur 1 durch Pfeile angedeutet, gelangt das Schmiermittel durch den Kanal 10 und 10' in die zwei voneinander axial beabstandeten Mündungen auf die Bolzenoberfläche und verteilt sich dort in beide Endbereiche des Bolzens 3, wie dies ebenfalls durch Pfeile angedeutet ist.

Der Schmiermittelfluss erfolgt somit zunächst radial und dann axial entlang der Bolzenoberfläche.

Wie dies weiter aus Figur 1 hervorgeht, teilt sich der Schmiermittelfluss an den Teilungspunkten T1 in zwei Teilströme auf, von denen einer weiter entlang der Bolzenoberfläche strömt und ein anderer radial nach außen zwischen dem Dichtring 17 und den Verstärkungsblechen 8 und 9.

In dem Teilungspunkt T2 erfolgt erneut eine Aufteilung des Schmiermittelstroms in einen Teil, der weiter axial entlang des Bolzens 3 strömt und dort in den Bereich zwischen Bolzen 3 und den Lagerschenkeln bzw. den Schaufellagerblechen und deren Verstärkungsteilen gelangt. Ein weiterer Teil strömt radial nach außen entlang der Dichtungen 17 und zwar zwischen den Dichtungen 17 und den Verstärkungsringen 4, 5.

Wie dies in Figur 1 angedeutet ist, ist die zweite Lippendichtung 90 somit derart ausgebildet, dass der aus axialer Richtung auf diese treffende Schmiermittelfluss teilweise die Dichtung 90 passieren kann und somit in einen Bereich jenseits der Dichtungen 17 gelangt, und teilweise nach außen radial abgeführt wird.

Die Schmiermittelmengen in dem Teilungspunkt T1 werden durch die physikalischen Eigenschaften des Schmiermittels und die Vorspannung und Ausformung der Lippendichtung 90 und 33 bestimmt. Ein weiterer die Schmiermittelmengen beeinflussender Parameter ist ein Axialspiel zwischen Lagerschenkel und dem drehbaren Teil, d.h. dem Schaufelarm 50 bzw. dessen Verstärkungsblechen 8, 9 das dadurch ermöglicht wird, dass der Dichtring in einer bevorzugten Ausgestaltung mit einem Spiel zwischen dem Lagerschenkel und dem drehbaren Teil aufgenommen ist. Durch die dadurch möglichen Relativbewegungen wird eine Förderung bzw. Verteilung des Schmiermittels bewirkt. Dieses Axialspiel eines einzelnen Dichtrings liegt ausgehend von einer mittleren Positionierung beispielsweise bei 1,6 mm in jede Richtung, d.h. einerseits zu dem Lagerschenkel und andererseits zu dem drehbaren Teil hin und somit bei insgesamt 3,2 mm. Bei diesen Werten handelt es sich selbstverständlich um exemplarische Werte, d.h. das Axialspiel kann auch andere Werte annehmen.

Die Schmierung im Bereich A ist von Bedeutung, da das Hubarmlager 50, 8, 9 und das Bolzenlager bzw. die Dichtungsringe 17 im Betrieb relativ zueinander bewegt werden.

Die Schmiermittelförderung wird zusätzlich dadurch gewährleistet, dass zwischen dem Außendurchmesser des Bolzens 3 und dem Innendurchmesser des Dichtungsringes 17 ein Spiel besteht, das pro Seite des Dichtungsrings 17 beispielsweise im Bereich von 0,1 mm bis 0,5 mm und vorzugsweise bei 0,25 mm liegt. Das radiale Gesamtspiel des Dichtungsrings 17 liegt somit bei dem doppelten Betrag.

Des Weiteren weist der Dichtring eine Fase 100 auf, die einen Raum begrenzt, der ebenfalls auf den Schmiermittelfluss Einfluss haben kann.

Dieser Raum kann im Querschnitt, wie in Figur 2 gezeigt dreieckig sein oder auch jede andere Form annehmen, wie z.B. rund, elliptisch etc. ausgeführt sein.

In dem Teilungspunkt T2 kann durch die Ausformung des am Bolzen anliegenden Dichtungsschenkels der Lippendichtung 90 eine vermehrte Schmiermittelförderung in horizontaler Richtung, d.h. in Längsrichtung des Bolzens 3 und damit in Richtung der Lagergabel 1, 4 bzw. 2, 5 erfolgen.

Durch die insbesondere aus Figur 2 ersichtliche sich verjüngende Form des mit dem Bolzen 3 in Verbindung stehenden Schenkels 91 der ersten Lippendichtung 90 sowie durch die Vorspannkraft, mit der diese auf den Bolzen 3 aufliegt kann die radiale Ausbreitung in Richtung der Lippendichtung 33 und die horizontale Ausbreitung in Richtung der Lagergabel 1, 4 bzw. 2, 5 beeinflusst werden.

Die Dichtung 90 kann aufvulkanisiert sein.

Ihre Eigenschaften sind durch das Material und die Geometrie sowie die spezielle Ausformung der einzelnen Schenkel 91, 92 charakterisiert.

Insbesondere durch die Vorspannung, mit der die erste Lippendichtung 90 bzw. deren Schenkel 91 an dem Bolzen 3 anliegt, wird die Durchlässigkeit in Richtung der Lagergabel, d.h. in axialer Richtung des Bolzens bestimmt.

Figur 1 und 2 zeigen die erste Lippendichtung 90 im vorgespannten Zustand, in dem diese an der Bolzenoberfläche anliegt. Durch die Winkeländerung zwischen dem unvorgespannten und vorgespannten Zustand dieses Schenkels erfolgt eine Längenänderung in horizontaler Richtung.

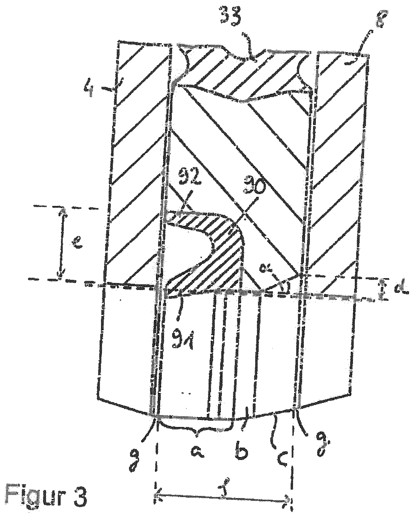

Wie dies aus Figur 1 und 2 ersichtlich ist, ist der am Bolzen liegende Schenkel 91 in axialer Richtung kürzer ausgeführt als der andere Schenkel 92, sodass ein Spalt a' besteht, der beispielsweise eine Länge von 0,2 mm bis 0,6 mm und vorzugsweise 0,5 mm aufweisen kann. Dieser Spalt besteht vor und nach dem Einsetzen des Bolzens, wie sich dies aus den Figuren 2 und 3 ergibt.

Die vorgespannte Lippendichtung 90 liegt nach Einschieben des Bolzens an dessen Oberfläche an und erlaubt leichte Relativbewegungen und Fertigungstoleranzen von Bolzen 3, Gabel 1, 4, 2, 5 und Lagerdichtung 17.

Die Lagerdichtung 17 liegt wie insbesondere aus Figur 2 ersichtlich sowohl an der Stirnseite bzw. an der Innenseite der Lagergabel 4 an, als auch an der Stirnseite bzw. Außenseite des drehbaren Teils 8 bzw. des Hubgerüsts.

Wie dies weiter aus Figur 2 hervorgeht, liegt die V-förmige zweite Lippendichtung 33 mit den Endbereichen ihrer beiden Dichtungsschenkel 33', 33" an den angrenzenden Wandungen an, die einerseits durch die Lagergabel und andererseits durch das drehbare Teil bzw. durch das Hubgerüst gebildet werden. Durch diese Lippendichtung wird einerseits ermöglicht, dass Schmiermittel aus dem Dichtungsbereich am Bolzen 3 austreten kann und andererseits bewirkt, dass Staub, Wasser etc. möglichst von dem Bolzen bzw. von den daran angeordneten Lagerstellen abgehalten wird.

Wie dies aus Figur 1 hervorgeht, werden die Dichtungsringe 17 derart eingebaut, dass die offene Seite des Cs der C-förmigen Lippendichtung nach außen weisen, d.h. nicht zu dem drehbaren Teil hin offen ist, sondern zur Lagergabel 1, 4 bzw. 2, 5.

Die Bolzenlagerdichtungen 17 haben die zusätzliche Aufgabe, den Abstand zwischen Lagergabel und Hubgerüstarm konstant zu halten, um eine zu große Relativbewegung zu verhindern. Daher ist vorgesehen, dass der Korpus 17' der Dichtungsringe 17 aus einem robusten Material besteht und vorzugsweise aus Metall.

Die Dichtungen 17 haben somit die Aufgabe eine Positionierung der Lagergabel und des Hubgerüstarms etc. zu gewährleisten, gleichzeitig müssen diese einen ausreichenden Schmiermittelfluss ermöglichen.

Der Abrieb des Lager-Hubgerüsts wird durch das Schmiermittel nach außen und von der Bewegungsstelle weg gefördert.

Vor dem Einsetzen des Rings 17 in den Bereich zwischen Lagergabel und Hubgerüst werden mittels des in Figur 1 und 2 dargestellten Außenrings 40 in einem Teilumfang, beispielsweise 120°der Dichtungsringe die beiden Dichtlippen 33', 33" der Lippendichtung 33 in den dargestellten Nuten 41, 42 aufgenommen und in dieser Position durch eine Verschraubung gehalten. Die Verschraubung zieht den Ring 40 zu der Seite des Dichtungsrings 17 hin, indem dieser nicht in formschlüssigem Kontakt mit der Lippendichtung 33 steht.

Dadurch wird erreicht, dass die Dichtungsringe 17 mit dem Bereich voraus, in dem die Dichtlippen in dem Ring 40 aufgenommen sind, zwischen die Lagergabel und das drehbare Teil eingeschoben werden können. Anschließend kann der Bolzen 3 eingeführt werden.

Im Anschluss daran kann der formschlüssige Kontakt zwischen den Dichtlippen 33', 33" und dem Ring 40 durch Verdrehen der genannten Schraube gelöst werden, sodass die in Figur 2 dargestellte Position erreicht wird, in der die einzelnen Lippen der Lippendichtung 33 an den jeweils benachbarten Wandungen anliegen.

Wie dies aus Figur 2 hervorgeht, liegt der Schenkel 91 der Lippendichtung 90 nicht vollflächig an der Bolzenoberfläche an, sondern nur mit seinem Endbereich. Durch eine geeignete Geometrie und Vorspannkraft, mit der dieser Schenkel an der Bolzenoberfläche anliegt kann die Schmiermittelmenge bestimmt werden, die axial durch die Dichtung hindurchtritt.

Das Bezugszeichen 21 kennzeichnet ein Halteblech, das mit dem die Bohrung 6 überragenden Fortsatz 20 verschweißt ist. Dieses Halteblech 21 weist eine mit der Bohrung 6 fluchtende Bohrung auf. Auf der Außenseite des Lagerblechs 1 ist ein Haltezapfen 24 aufgeschweißt, der sich durch eine Bohrung 21' des Halteblechs 21 erstreckt und in dessen Innengewinde die Schraube 27 eingreift. Auf diese Weise wird der Bolzen 3 relativ zu den Lagerschenkeln fixiert.

Aus Figur 2 gehen des Weiteren die Maße a bis g und der Winkel α der Fase hervor.

Das Maß a ist die sich in Richtung der Bolzenlängsachse erstreckende Länge der Dichtung 90. Dieses Maß liegt vorzugsweise im Bereich zwischen 6 mm und 10 mm und vorzugsweise bei 8 mm.

Das Maß b ist die sich in Richtung der Bolzenlängsachse erstreckende Länge des Randes des Grundkörpers 17', der sich an die Dichtung 90 anschließt, bis zur Fase 100. Dieses Maß liegt vorzugsweise im Bereich zwischen 1 mm und 3 mm und vorzugsweise bei 2 mm.

Das Maß c ist die sich in Richtung der Bolzenlängsachse erstreckende Länge der Fase 100. Dieses Maß liegt vorzugsweise im Bereich zwischen 2 mm und 6 mm und vorzugsweise bei 4 mm.

Das Maß d ist die sich in radialer Richtung erstreckende Höhe der Fase 100. Dieses Maß liegt vorzugsweise im Bereich zwischen 1 mm und 3 mm und vorzugsweise bei 1,875 mm.

Das Maß e ist die sich in radialer Richtung erstreckende Höhe der Dichtung 90. Dieses Maß liegt vorzugsweise im Bereich zwischen 5 mm und 10 mm und vorzugsweise bei 7,5 mm.

Das Maß f ist die sich in Richtung der Bolzenlängsachse erstreckende Gesamtlänge der Dichtung 90. Dieses Maß ergibt sich aus der Summe der Maße a, b und c.

Das Maß g ist das gesamte Axialspiel, das die Dichtung 17 in dem Bereich zwischen der Lagergabel und dem Hubgerüst hat. Dieses Maß liegt vorzugsweise im Bereich zwischen 0,25 mm und 2 mm und vorzugsweise bei 1,6 mm.

Der Winkel α ist schließlich die Neigung der Fase relativ zur Horizontalen. Dieser Winkel liegt vorzugsweise im Bereich zwischen ca. 9,5 °und ca. 56° und besonders bevorzugt bei 34°.

Das Verhältnis a/f liegt vorzugsweise im Bereich zwischen 0,3 bis 0,8, das Verhältnis b/f liegt vorzugsweise im Bereich zwischen 0,1 bis 0,3 und das Verhältnis f/e liegt vorzugsweise im Bereich zwischen 1,5 bis 2,5.

Die oben genannten Maße und Verhältnisse gelten vorzugsweise für verschiedene Bolzendurchmesser, z.B. im Durchmesserbereich von 70 mm bis 100 mm und sind für diese vorzugsweise identisch.

Figur 2 zeigt die Situation, bei der der Bolzen 3 eingesetzt ist und der Schenkel 91 der Lippendichtung 90 somit an der Bolzenoberfläche anliegt.

Figur 3 zeigt den Zustand vor dem Einsetzen des Bolzens 3. In Figur 3 ist die spätere Position des (nicht eingesetzten) Bolzens durch die gestrichelte Linie gekennzeichnet.

Wie dies aus Figur 3 hervorgeht, ragt in dem Zustand, in dem der Bolzen nicht eingesetzt ist, die Dichtung 90 mit einem Teilbereich des Schenkels 91 in den nach dem Einsetzen des Bolzens von diesem eingenommen Bereich, d.h. überschreitet die gestrichelte Linie beispielsweise um 1 mm. Dieser Abschnitt wird durch den Bolzen verformt, d.h. gemäß Figur 3 nach oben bewegt und liegt dann mit einer gewissen Kraft an der Bolzenoberfläche an, wie dies in Figur 2 dargestellt ist.

## Patentansprüche

1. Lageranordnung umfassend:
einen Lagerschenkel (1, 2), der mit einer Bohrung (6, 7) versehen ist,
einen in der Bohrung (6, 7) angeordneten Bolzen (3), sowie
einen auf dem Bolzen (3) gelagerten und relativ zu dem Lagerschenkel (1, 2) drehbaren Teil (8, 9, 50), in dessen Lagerbohrung der Bolzen (3) aufgenommen ist, wobei zwischen dem drehbaren Teil (8, 9, 50) und dem Lagerschenkel (1, 2) ein auf dem Bolzen (3) angeordneter Dichtring (17) vorgesehen ist, wobei
der Dichtring (17) auf seiner dem Bolzen (3) zugewandten Seite eine erste Lippendichtung (90) aufweist, die derart ausgebildet ist, dass Schmiermittel den Bereich zwischen dem Bolzen (3) und der ersten Lippendichtung (90) passieren kann,
**dadurch gekennzeichnet, dass** der Dichtring (17) über eine zweite Lippendichtung (33) verfügt, die im Querschnitt V- oder Y-förmig ausgebildet ist und mit einem ihrer beiden Dichtungsschenkel (33', 33") an dem Lagerschenkel (1, 2) und mit dem anderen an dem drehbaren Teil (8, 9, 50) anliegt.

2. Lageranordnung nach Anspruch 1, **dadurch gekennzeichnet, dass** beidseitig des drehbaren Teils (8, 9, 50) jeweils ein Dichtring (17) angeordnet ist.

3. Lageranordnung nach Anspruch 1 oder 2, **dadurch gekennzeichnet, dass** ein Schmiermittelkanal (10) vorgesehen ist, der an einer ersten Position (11) auf der Oberfläche des Bolzens (3) mündet, und der derart angeordnet ist, dass das Schmiermittel von dessen Endbereich aus zu dem Dichtring (17) fließt.

4. Lageranordnung nach Anspruch 3, **dadurch gekennzeichnet, dass** ein zweiter Schmiermittelkanal (10''') vorgesehen ist, der an einer von der zweiten Position in axialer Richtung des Bolzens (3) beabstandeten Position auf der Oberfläche des Bolzens (3) mündet, wobei der zweite Schmiermittelkanal (10''') eine Abzweigung von dem ersten Schmiermittelkanal (10) darstellt oder von dem ersten Schmiermittelkanal (10) eigenständig ist.

5. Lageranordnung nach einem der vorhergehenden Ansprüche, **dadurch gekennzeichnet, dass** die erste Lippendichtung (90) mit einer Vorspannung an dem Bolzen (3) anliegt.

6. Lageranordnung nach einem der vorhergehenden Ansprüche, **dadurch gekennzeichnet, dass** die erste Lippendichtung (90) im Querschnitt C-förmig ausgebildet ist, wobei vorzugsweise vorgesehen ist, dass die offene Seite des C-förmigen Querschnitts zu dem Lagerschenkel (1, 2) hinweist.

7. Lageranordnung nach Anspruch 6, **dadurch gekennzeichnet, dass** ein Schenkel (92) der C-förmig ausgebildeten ersten Lippendichtung (90) an dem Lagerschenkel (1, 2) anliegt und der andere Schenkel (91), vorzugsweise der an dem Bolzen anliegende Schenkel von dem Lagerschenkel (1, 2) beabstandet ist.

8. Lageranordnung nach einem der vorhergehenden Ansprüche, **dadurch gekennzeichnet, dass** der Dichtring (17) mit einem Außenring (40) versehen ist, der eine oder mehrere Nuten (41, 42) aufweist, in denen ein Teil der zweiten Lippendichtung (33), vorzugsweise die äußeren Ränder der Dichtlippen des V- oder Y-förmigen Profils aufgenommen sind.

9. Lageranordnung nach einem der vorhergehenden Ansprüche, **dadurch gekennzeichnet, dass** der Dichtring (17) einen Grundkörper aufweist, der aus einem formstabileren Material besteht als die erste Lippendichtung (90), wobei vorzugsweise vorgesehen ist, dass der Grundkörper aus Metall besteht und als Distanzring ausgeführt ist.

10. Mobile Arbeitsmaschine, insbesondere Radlader, mit wenigstens einer Lageranordnung nach einem der Ansprüche 1 bis 9.

11. Verfahren zur Bereitstellung einer Lageranordnung nach einem der Ansprüche 1 bis 9, **dadurch gekennzeichnet, dass** das Verfahren den Schritt des Einschiebens des Bolzens (3) in den Dichtring (17) aufweist, wobei die erste Lipppendichtung (90) oder ein Teil der ersten Lippendichtung (90) beim Einschieben des Bolzens (3) derart verformt wird, dass dieser mit einer Vorspannung an der Bolzenoberfläche anliegt.

## Claims

1. A bearing assembly comprising:
a bearing journal (1, 2) that is provided with a bore (6, 7);
a pin (3) arranged in the bore (6, 7); and
a part (8, 9, 50) which is supported on the pin (3), which is rotatable relative to the bearing journal (1, 2), and in whose bearing bore the pin (3) is received, wherein
a sealing ring (17) arranged on the pin (3) is provided between the rotatable part (8, 9, 50) and the bearing journal (1, 2); and wherein
the sealing ring (17) has on its side facing the pin (3) a first lip seal (90) that is configured such that lubricant can pass through the region between the pin (3) and the first lip seal (90),
**characterized in that**
the sealing ring (17) has a second lip seal (33) that is V-shaped or Y-shaped in cross-section and one of whose two sealing limbs (33', 33") contacts the bearing journal (1, 2) and whose other one contacts the rotatable part (8, 9, 50).

2. A bearing assembly in accordance with claim 1, **characterized in that** a respective sealing ring (17) is arranged at both sides of the rotatable part (8, 9, 50).

3. A bearing assembly in accordance with claim 1 or claim 2, **characterized in that** a lubricant passage (10) is provided that opens at a first position (11) on the surface of the pin (3) and that is arranged such that the lubricant flows from out of its end region toward the sealing ring (17).

4. A bearing assembly in accordance with claim 3, **characterized in that** a second lubricant passage (10''') is provided that opens at a position on the surface of the pin (3) spaced apart from the second position in the axial direction of the pin (3), with the second lubricant passage (10''') representing a branch of the first lubricant passage (10) or is independent of the first lubricant passage (10).

5. A bearing assembly in accordance with one of the preceding claims, **characterized in that** the first lip seal (90) contacts the pin (3) with a preload.

6. A bearing assembly in accordance with one of the preceding claims, **characterized in that** the first lip seal (90) is C-shaped in cross-section, with provision preferably being made that the open side of the C-shaped cross-section faces toward the bearing journal (1, 2).

7. A bearing assembly in accordance with claim 6, **characterized in that** a limb (92) of the C-shaped first lip seal (90) contacts the bearing journal (1, 2); and **in that** the other limb (91), preferably the limb contacting the pin, is spaced apart from the bearing limb (1, 2).

8. A bearing assembly in accordance with one of the preceding claims, **characterized in that** the sealing ring (17) is provided with an outer ring (40) that has one or more grooves (41, 42) in which a part of the second lip seal (33), preferably the outer margins of the sealing lips of the V-shaped or Y-shaped profile, is received.

9. A bearing assembly in accordance with one of the preceding claims, **characterized in that** the sealing ring (17) has a base body that comprises a more shape stable material than the first lip seal (90), with provision preferably being made that the base body comprises metal and is formed as a spacer ring.

10. A mobile work machine, in particular a wheeled loader, having at least one bearing assembly in accordance with one of the claims 1 to 9.

11. A method of providing a bearing assembly in accordance with one of the claims 1 to 9, **characterized in that** the method comprises the step of pushing the pin (3) into the sealing ring (17), with the first lip seal (90) or a part of the first lip seal (90) being deformed on the insertion of the pin (3) such that said part of the first lip seal contacts the pin surface with a preload.

## Revendications

1. Système de palier comprenant :
une branche de palier (1, 2) qui est pourvue d'un alésage (6, 7),
un boulon (3) disposé dans l'alésage (6, 7), et
une pièce (8, 9, 50) rotative par rapport à la branche de palier (1, 2) et montée sur le boulon (3), le boulon (3) étant reçu dans l'alésage de palier de celle-ci, dans lequel
une bague d'étanchéité (17) disposée sur le boulon (3) est prévue entre la pièce rotative (8, 9, 50) et la branche de palier (1, 2),
la bague d'étanchéité (17) comportant sur son côté faisant face au boulon (3) un premier joint à lèvre (90), qui est réalisé de telle manière que du lubrifiant peut franchir la zone entre le boulon (3) et le premier joint à lèvre (90),
**caractérisé en ce que**
la bague d'étanchéité (17) dispose d'un second joint à lèvre (33), qui est réalisé avec une section transversale en forme de V ou de Y et qui s'appuie, avec une de ses deux branches de joint (33', 33") contre la branche de palier (1, 2) et avec l'autre contre la pièce rotative (8, 9, 50).

2. Système de palier selon la revendication 1, **caractérisé en ce qu'**une bague d'étanchéité (17) est disposée respectivement des deux côtés de la pièce rotative (8, 9, 50).

3. Système de palier selon la revendication 1 ou 2, **caractérisé en ce qu'**un canal de lubrifiant (10) est prévu, qui débouche en une première position (11) sur la surface du boulon (3), et qui est disposé de telle manière que le lubrifiant s'écoule de sa zone d'extrémité à la bague d'étanchéité (17).

4. Système de palier selon la revendication 3, **caractérisé en ce qu'**un second canal de lubrifiant (10''') est prévu, qui débouche en une position espacée de la seconde position dans la direction axiale de boulon (3) sur la surface du boulon (3), le second canal de lubrifiant (10''') représentant une ramification du premier canal de lubrifiant (10) ou étant indépendant du premier canal de lubrifiant (10).

5. Système de palier selon l'une des revendications précédentes, **caractérisé en ce que** le premier joint à lèvre (90) s'appuie sous une précontrainte contre le boulon (3).

6. Système de palier selon l'une des revendications précédentes, **caractérisé en ce que** le premier joint à lèvre (90) est réalisé avec une section transversale en forme de C, le côté ouvert de la section transversale en forme de C étant de préférence prévu tourné vers la branche de palier (1, 2).

7. Système de palier selon la revendication 6, **caractérisé en ce qu'**une branche (92) du premier joint à lèvre (90) réalisé en forme de C s'appuie contre la branche de palier (1, 2) et l'autre branche (91), de préférence la branche s'appuyant contre le boulon, est espacée de la branche de palier (1, 2).

8. Système de palier selon l'une des revendications précédentes, **caractérisé en ce que** la bague d'étanchéité (17) est pourvue d'une bague extérieure (40), qui comporte une ou plusieurs rainures (41, 42), dans lesquelles est reçue une partie du second joint à lèvre (33), de préférence les bords extérieurs des lèvres d'étanchéité du profil en forme de V ou de Y.

9. Système de palier selon l'une des revendications précédentes, **caractérisé en ce que** la bague d'étanchéité (17) comporte un corps de base, qui est constitué d'un matériau plus rigide que le premier joint à lèvre (90), le corps de base étant de préférence prévu constitué de métal et réalisé sous la forme d'une bague d'écartement.

10. Machine de travail mobile, en particulier chargeur sur pneus, comprenant au moins un système de palier selon l'une des revendications 1 à 9,

11. Procédé destiné à mettre à disposition un système de palier selon l'une des revendications 1 à 9, **caractérisé en ce que** le procédé comporte l'étape consistant à insérer le boulon (3) dans la bague d'étanchéité (17), le premier joint à lèvre (90) ou une partie du premier joint à lèvre (90) étant déformé(e) lors de l'insertion du boulon (3) de manière à s'appuyer sous une précontrainte contre la surface de boulon.
